# EUROPEAN PATENT SPECIFICATION

(11) **EP 2 045 974 B1**
(45) Date of publication and mention of the grant of the patent: **23.01.2013**
(21) Application number: 07785474.3
(22) Date of filing: 30.08.2007
(51) Int. Cl.: H04L 12/70

(54) **A METHOD AND SYSTEM FOR NETWORK SERVICE CONTROLLING**
VERFAHREN UND SYSTEM ZUR NETZWERK-DIENSTSTEUERUNG
PROCÉDÉ ET SYSTÈME DE CONTRÔLE DE SERVICE DE RÉSEAU

(30) Priority: 18.10.2006 CN 200610063200
(43) Date of publication of application: 08.04.2009
(73) Proprietor: Huawei Technologies Co., Ltd., Longgang District, Shenzhen Guangdong 518129 (CN)
(72) Inventor: LV, Zhenzhu, Shenzhen Guangdong 518129 (CN); WANG, Chuntao, Shenzhen Guangdong 518129 (CN)
(74) Representative: Kreuz, Georg Maria
(86) International application number: PCT/CN2007/070588
(87) International publication number: WO 2008/046326

(56) References cited:
- WO-A2-03/017059
- CN-A- 1 574 833
- US-A1- 2005 041 584
- US-A1- 2005 088 977
- US-A1- 2005 088 977
- "NGN Functional Architecture; Resource and Admission Control Subsystem (RACS); Release 1; Draft ETSI ES 2XX XXX" ETSI STANDARDS, LIS, SOPHIA ANTIPOLIS CEDEX, FRANCE, no. V 1.2.0, 1 December 2004 (2004-12-01), XP014021281 ISSN: 0000-0001
- "3rd Generation Partnership Project; Technical Specification Group Services and System Aspects; Policy and charging control architecture (Release 7)", 3GPP-STANDARDS, 2500 WILSON BOULEVARD, SUITE 300, ARLINGTON, VIRGINIA 22201 USA, 1 September 2006 (2006-09-01), XP040278229,

## Description

### Field of the Invention

The present invention relates to the field of communications and in particular to a method and system for controlling a network service.

### Background of the Invention

The IP based broadband bearer network will become the next generation telecommunication network along with constant development of IP technologies. The Quality of Service (QoS) and security of telecommunication services are crucial issues that have to be addressed for the IP based next generation telecommunication network. In the next generation telecommunication network, the use of the entire bearer network has to be controlled effectively in order to guarantee service transmission, especially for current constantly emerging provisions of voice or multimedia services in a Peer to Peer (P2P) way over the network.

The following two similar technical solutions for guaranteeing QoS based upon a bearer control layer have been proposed in the prior art.

1. In the architecture of Policy and Charging Control (PCC), a policy control mechanism based upon service and subscription profile information is used so that a Gateway (GW) through which a data flow is passing enforces a control function in accordance with a dynamic policy issued from a Policy and Charging Rules Function (PCRF) to guarantee legality of the data flow while enforcing functions of flow monitoring, shaping, queue scheduling, etc. But this existing architecture offers no specific solution for addressing a service application.

2. In the architecture of Resource and Admission Control Sub-system (RACS), a Service-based Policy Decision Function (SPDF) is arranged with functions similar to part of the functions of the PCRF. These two solutions are slightly different in terms of their implementation detail among others due to different types of access networks on which considerations were focused when they were designed.

However, the QoS control flows and the related policies proposed in whichever of the solutions are primarily intended for a conference-type service, that is, a Policy Decision Function (PDF) interacts with an Application Function (AF) to obtain dynamic service information. In other words, a bearer network knows IP address and port information of a service flow from interaction between the PDF and the application system, and then notifies a bearer network device about the service flow on which a corresponding policy action is to be performed. However, such a QoS control mechanism can not be applied to an existing P2P service such as Skype, BT and MSN. Such P2P service is primarily **characterized in that** the service is provided and controlled by a third party content provider and no device of a network operator will be involved during signaling interaction for establishment of the services. Accordingly, the network operator can not ensure that the third party AF will interact actively with the PDF for enforcement of dynamic policy control before a subscriber requests for the service.

In a current method for enforcing network control for the P2P service, a firewall is generally arranged before an edge node at the edge of a core network, and a policy for the P2P service is configured statically on the firewall for control of the P2P service. The inventors have identified during the implementation of the solution that this solution has at least the following drawbacks: the policy for the P2P service is configured statically, no specific control for a subscriber can be offered, and it may not be applied flexibly to various service operation modes (for example, a subscriber paying an extra fee is allowed an access to the P2P service while other subscribers are prohibited). Furthermore, because new P2P services are featured with rapid emergence and development, service policy configuration rules have to be added or modified with frequent manual operations when the P2P services change, which may be adverse to network operation and maintenance.
In addition, US2005/041584A1, which is published in February 24, 2005, discloses a system and method for the implementation of fine-grained quality of service in a mobile telecommunications environment uses an Auto-IP Policy Decision Point (PDP) to determine what traffic optimizations actions should be taken in reaction to various network conditions. The Auto-IP PDP uses as inputs information from a G.sub.b interface probe to determine the user identification of an IP data flow, information from the radio access network (RAN) network management system (NMS) regarding network congestion. The cell traffic information is passed onto a traffic analysis and processing engine, the Auto-IP PDP which maps the real-time traffic information into an n-dimensional traffic model. An automated policy decision guiding algorithm is executed on the n-dimensional traffic model and selects policy based on the traffic and cell congestion conditions, without human intervention. Additionally, a consistency check is performed to ensure that new policies are consistent with existing policies. The policy decision outcome is forwarded to the Auto-IP Traffic Optimizer that acts on the network at a point in the network (G.sub.i) that is different from where traffic problem occurs in the RAN. The Auto-IP Traffic Optimizer implements the decisions of the Auto IP-PDP by performing traffic shaping, TCP window clamping or other traffic optimization procedures on a cell-by-cell basis.
US2005/088977A1, which is published in April 28, 2005, discloses a method to provide dynamic Quality of Service (QoS) treatment of traffic within a secure Virtual Private Network (VPN) tunnel by attaching a QoS marker to data traffic at an ingress end of the VPN tunnel. The QoS marker is obtained by querying a policy database. The policy database returns QoS information, from which the QoS marker is derived. The policy data base can be queried by a VPN Gateway at an ingress end of the tunnel during tunnel setup, and/or at any time following tunnel setup to obtain updated QoS information. This updated QoS information is then propagated through the VPN tunnel to a VPN gateway at the opposite end of the VPN Tunnel, so that it can be used for egress processing of the tunnel. traffic without renegotiating the Security Association. Consequently, re-establishment of the tunnel is not required in order to change the QoS treatment of tunnel traffic.
Document "NGN Functional Architecture; Response and Admission Control Subsystem (RACS); release 1; Draft ETSI ES 2xx xxx" (ETSI STANDARDS, LIS, SOPHIA ANTIPOLIS CEDEX, FRANCE, no. V 1.2.0, 1 December 2004, XP014021281 ISSN:0000-0001) describes the function Functional Architecture for RACS. RACS is the TISPAN NGN subsystem, responsible for elements of policing control including resource reservation and admission control. RACS also includes support for Network Address Translator (NAT) and Firewall (FW) Transversal.

Document "3GPP TS 23.203 V7.00 (2006-09); 3rd generation Partership Project; Technical Specification Group Services and System Aspects" describes the "Policy and charging control architecture (Release 7).

### Summary of the Invention

Embodiments of the invention provide a method and system for controlling a network service to guarantee differentiated qualities of service when different subscribers have access to the network service.

The invention provides a method for controlling a network service transported via a policy enforcement point, which includes:

receiving, by the policy enforcement point, a data flow belonging to a peer-to-peer, P2P, service from a terminal, wherein the data flow belonging to the P2P service is transported from the terminal to another terminal, and the policy enforcement point is an intermediate node in a data channel of the data flow;
identifying, by the policy enforcement point, a subscriber identifier of the data flow, conducting deep packet inspection in accordance with a P2P service feature mode information issued by an operator policy provision repository and recorded in the policy enforcement point, and matching against with the service feature mode information to determine a service identifier of the data flow, wherein the service identifier is adapted to indicate that data flow corresponds to the P2P service;
initiating, by the policy enforcement point, a policy requesting message carrying the service identifier the subscriber identifier to a policy decision point;
associating, by the policy decision point, policy information in accordance with the subscriber identifier and the service identifier carried in the policy requesting message, and generating, by the policy decision point, one or more dynamic deep packet inspection policies upon determining from the service identifier that the data flow belongs to the P2P service;

obtaining, by the policy enforcement point, the one or more dynamic deep packet inspection policies from the policy decision point, wherein the one or more dynamic deep packet inspection policies comprise the subscriber identifier, the service identifier, the P2P service feature mode information, and at least one of parameters of a quality of service level, a limited number of flows, redirection, and uplink/downlink bandwidths; and

processing, by the policy enforcement point, a data flow from a terminal in accordance with the dynamic deep packet inspection policies.

The invention further provides a policy enforcement point, which includes: a deep packet inspection module adapted to receive a data flow belonging to a peer-to-peer, P2P, service from a terminal, identify a subscriber identifier of the data flow, conduct deep packet inspection in accordance with a P2P service feature mode information issued by an operator policy provision repository and recorded in the policy enforcement point, and match against with the service feature mode information to determine a service identifier of the data flow, wherein the data flow belonging to the P2P service is transported from the terminal to another terminal, and the policy enforcement point is an intermediate node in a data channel of the data flow, the service identifier is adapted to indicate that data flow corresponds to the P2P service, and the service feature mode information includes feature mode information of the P2P service; means for generating a policy request message based on the subscriber identifier and the service identifier and sending the policy request message to a policy decision point; and a policy enforcement module adapted to process the data flow from the terminal based on a dynamic deep packet inspection policy obtained from the policy decision point, the dynamic deep packet inspection policy comprises the subscriber identifier, the service identifier, the P2P service feature mode information, and at least one of parameters of a quality of service level, a limited number of flows, redirection, and uplink/downlink bandwidths.

The invention further provides a system for controlling a network service, which includes a policy enforcement point described above, and a policy decision point configured to retrieve service policy information and subscription profile information, and generate based on the service policy information and the subscription profile information a dynamic deep packet inspection policy.

The method and system for controlling a network service according to the invention process a data flow by a dynamic deep packet inspection policy to guarantee differentiated qualities of service when different subscribers have an access to the network service. The invention also provides a dynamic policy control to enforce control on the service in the network, therefore a reduced cost of network operation is obtained.

### Brief Description of the Drawings

The invention is further described hereinafter with reference to the embodiments and the drawings in which:

Fig.1 illustrates a schematic diagram of a structure of the system for controlling a network service according to an embodiment of the invention;

Fig.2 illustrates a flow diagram of the method for controlling a network service according to an embodiment of the invention;

Fig.3 is a schematic diagram of a first embodiment of the method in Fig.2; and

Fig.4 is a schematic diagram of a second embodiment of the method in Fig.2.

### Detailed Description of the Invention

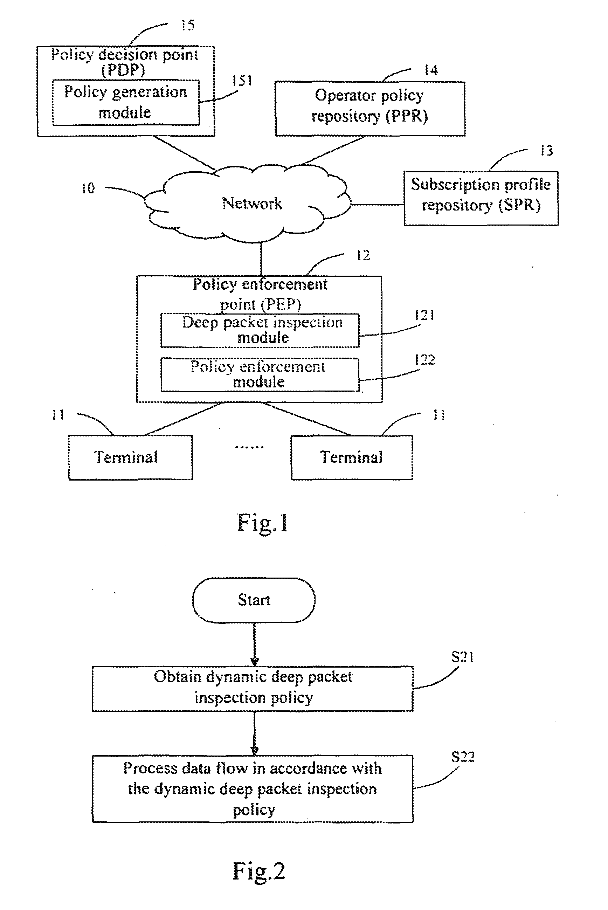

Reference is made to Fig.1 which illustrates a schematic diagram of a structure of the system for controlling a network service according to an embodiment of the invention. The invented system for controlling a network service includes a policy enforcement point 12, a policy decision point 15, a subscription profile repository 13 and an operator policy provision repository 14, which are connected with a network, where a plurality of terminals 11 are connected with the policy enforcement point 12, so that the terminals 11 can transfer data via the policy enforcement point 12. A subscriber refers to a virtual entity which logs on the system with a subscriber identifier on the terminal 11 and uses the system, and an operation of the subscriber in the system is performed through the terminal 11.

The operator policy provision repository 14 contains service policy information which includes service feature mode information including P2P service feature mode information, and Service Level Agreement (SLA) policies of subscriber group-specific, service-specific or third party operator-specific, etc. The subscription profile repository 13 contains subscription profile information, i.e., information of a profile with a network operator, which is subscriber-specific QoS policy information including subscriber group information, subscriber quality of service profile information, a service subscription relationship, etc.

The policy decision point 15 retrieves a policy from the operator policy provision repository 14 and the subscription profile repository 13 over the network 10, interprets the policy and transmits the policy to the policy enforcement point 12 for enforcement. The policy decision point 15 is required to translate the policy retrieved from the operator policy provision repository 14 and the subscription profile repository 13 into a format understandable by the corresponding policy enforcement point 12. The policy decision point 15 also receives a policy request message from the policy enforcement point 12 and returns a corresponding policy.

In this embodiment, the policy decision point 15 includes a policy generation module 151 which retrieves service policy information from the operator policy provision repository 14 and subscription profile information from the subscription profile repository 13 and which then generates based on the service policy information and the subscription profile information a dynamic Deep Packet Inspection (DPI) policy including the subscriber identifier, service feature mode information, and at least one of parameters of a quality of service level, a limited number of flows, redirection and uplink and downlink bandwidths and possibly other information.

The policy enforcement point 12 includes a deep packet inspection module 121 and a policy enforcement module 122. The deep packet inspection module 121 is adapted to inspect and identify the subscriber identifier, and the service identifier which identifies a service type, of a data flow from the terminal 11. The policy enforcement module 122 is adapted to obtain the specific policy from the policy decision point 15 and to process the data flow passing the policy enforcement point 12 in accordance with the obtained specific policy. The data flow is transported from one terminal to another terminal, and the policy enforcement point 12 is an intermediate node in the data channel. And in a practical application, the policy enforcement point 12 can also be a gateway, a firewall, a router, a security operating system, etc. In this embodiment, the policy enforcement point 12 after identifying the service identifier of the data flow by the deep packet inspection module 121 processes by the policy enforcement module 122 the data flow of the terminal 11, for example, by performing an operation of Committed Access Rate (CAR), limited flow, priority indication, congestion avoidance, packet rejection, redirection, etc., on the data flow, in accordance with the dynamic deep packet inspection policy from the policy decision point 15.

In the system of this embodiment, the policy enforcement point 12 can further include a module adapted to generate the policy request message based on the service identifier and the subscriber identifier and to transmit the policy request message to the policy decision point 15. The policy decision point 15 can further include a first trigger module (not shown) which triggers the policy generation module 151 to generate the corresponding dynamic deep packet inspection policy upon reception from the policy enforcement point 12 of the policy request message generated based on the service identifier and the subscriber identifier resulting from inspection by the deep packet inspection module 121.

In the system of another embodiment of the invention, the policy decision point 15 can further include a second trigger module (not shown) which triggers the policy generation module 151 to generate the corresponding dynamic deep packet inspection policy upon reception of a message that the terminal 11 logs on, which includes the subscriber identifier or similar information identifying the logging terminal 11. At this point, the policy generation module 151 retrieves the service policy information of all types of services from the operator policy provision repository 14 and the profile information of the subscriber from the subscription profile repository 13 and generates based on the information and transmits a plurality of dynamic deep packet inspection policies to the policy enforcement point 12. The policy enforcement point 12 identifies the data flow by deep packet inspection and then selects one of the dynamic deep packet inspection policies matching the service identifier of the data flow for processing thereof

Further to the above architecture of the system, reference is made to Fig.2 which illustrates a flow chart of the method for controlling a network service according to an embodiment of the invention, where a network service is transported between the terminals 11 via the policy enforcement point 12 in the following steps.

Step S21: The policy enforcement point 12 retrieves from the policy decision point 15 a dynamic deep packet detection policy of a corresponding subscriber, which is generated by the policy decision point 15 based on the subscription profile information of the subscription profile repository and the service policy information of the operator policy provision repository. Naturally, the dynamic deep packet detection policy can also be set directly as needed. The dynamic deep packet detection policy includes the subscriber identifier, service feature mode information, the service identifier and at least one of parameters of QoS level, a limited number of flows, redirection and uplink and downlink bandwidths.

The policy decision pint 15 generates a dynamic deep packet inspection policy upon reception of a policy request message from the policy enforcement point 12 or of a message that the terminal 11 logs on.

Step S22: The policy enforcement point processes a data flow from the terminal in accordance with the dynamic deep packet inspection policy, for example, CAR, limited flow, priority indication, congestion avoidance, packet rejection, redirection, etc.

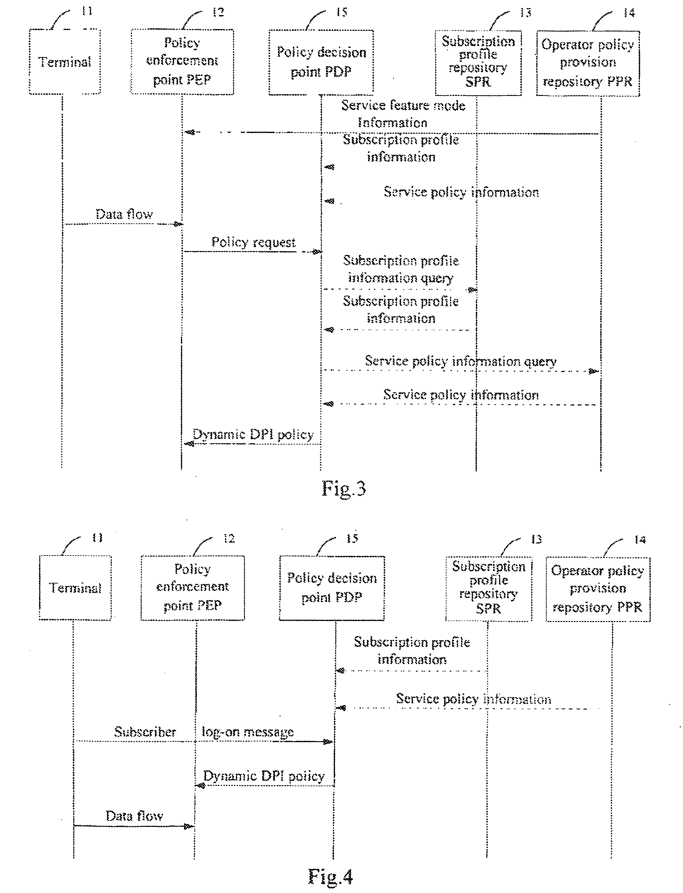

Reference is made to Fig.3 which illustrates a data flow diagram of a first embodiment of the method illustrated in Fig.2.

Firstly, the policy enforcement point 12 after being initiated interacts with a network administrator or the operator policy provision repository 14, so that service feature mode information, service identifiers, etc., are issued to the policy enforcement point 12 for record and storage, and this interaction process is known in the prior art and therefore has not been illustrated, and only an interaction result has been represented. In this embodiment, the service feature mode information includes feature mode information of a P2P service. Naturally, feature mode information of other types of services can further be included in a practical application.

Furthermore, the policy decision point 15 after being initiated obtains subscription profile information from the subscription profile repository 13 and stores locally the subscription profile information for record. Alike, the policy decision point 15 after being initiated obtains service policy information including service identifiers, corresponding operator policy rules, etc., from the operator policy provision repository 14 and stores locally the service policy information for record.

The terminal 11 initiates the service for generation of a data flow and transmits the data flow to the policy enforcement point 12. Upon reception of the data flow, the policy enforcement point 12 identifies the subscriber identifier of the data flow, conducts deep packet parsing in accordance with the locally recoded service feature mode information, matches against with the local service feature mode information, determines the service identifier corresponding to the data flow (the service identifier is information used between the policy decision point and the policy enforcement point to identify a specific service application and can be a specific port or a specific character string), and then initiates a policy request message carrying the service identifier and the subscriber identifier to the policy decision point 15 in accordance with the service identifier and the subscriber identifier to obtain a data flow processing policy. In this process, either packet rejection or a Best effort Forwarding (BF) approach for scheduling and forwarding can be performed for an unidentifiable service flow.

The policy decision point 15 determines and associates policy information in accordance with the subscriber identifier and the service identifier in the policy request, and generates a dynamic deep packet inspection policy when determining from the service identifier that the data flow belongs to the P2P service. If subscription profile information is already present locally at the policy decision point 15, then it directly obtains the subscription profile information locally; if service policy information is already present locally at the policy decision point 15, then it directly obtains the service policy information locally; and if neither subscription profile information nor service policy information is present locally at the policy decision point 15, then it queries the subscription profile repository 13 and obtains subscription profile information in accordance with the subscriber identifier and queries the operator policy provision repository 14 and obtains service policy information in accordance with the service identifier, and then makes a comprehensive decision based on the subscription profile information and the service policy information and generates and returns a dynamic deep packet inspection policy to the policy enforcement point 12. The dynamic deep packet detection policy includes the subscriber identifier, service feature mode information, the service identifier and a quality of service level, a limited number of flows, redirection, uplink and downlink bandwidths, etc.

Subsequent occurrence of another event such as service relationship removal/subscription by the terminal subscriber, a change of the information of the operator policy provision repository 14, etc., will trigger accordingly the policy decision point 15 to update actively the dynamic deep packet inspection policy. Because dynamic deep packet inspection policy is generated when a terminal has an access to the system, if the subscription profile repository or the operator policy provision repository has been changed when the terminal has an access to the system, then a new dynamic deep packet inspection policy is generated based on the changed information, thereby enabling automatic update of the dynamic deep packet inspection policy.

Finally, the policy enforcement point 12 performs corresponding policy scheduling on the data flow, for example, by an action of priority indication, flow monitoring/shaping, congestion handling, etc., in accordance with the obtained deep packet inspection policy.

Reference is made to Fig.4 which illustrates a schematic diagram of a second embodiment of the method illustrated in Fig.2.

Firstly, the policy decision point 15 interacts with the subscription profile repository 13 to obtain subscription profile information including subscriber group information, subscriber quality of service levels, service subscription relationship, etc. The policy decision point 15 also interacts with the operator policy provision repository 14 to obtain service policy information of all types of services including SLA policies of subscriber group-specific, service-specific or third party operator-specific, and feature mode information of a P2P service, etc.

Upon reception of a message that a subscriber logs on, which includes a subscriber identifier, the policy decision point 15 makes a comprehensive decision based on the subscription profile information and the service policy information of all types of services, and issues a plurality of dynamic deep packet inspection policies, each of which includes the subscriber identifier, the service feature mode information, a service identifier, a level of service quality, a limited number of flows, redirection, uplink and downlink bandwidths, etc., to the policy enforcement point 12.

Subsequent occurrence of another event such as service relationship removal/subscription by the terminal subscriber, a change of the information of the operator policy provision repository 14, etc., will trigger accordingly the policy decision point 15 to update actively the dynamic deep packet inspection policy. In this embodiment, the policy decision point 15 can know the log-on or log-off status of the terminal 11 in a way that the policy enforcement point 12 reports the log-on or log-off status of the terminal I 1 to the policy decision point 15 or that another device such as an NASS notifies the policy decision point 15 about the log-on or log-off status of the terminal 11.

When the policy decision point 15 receives the terminal log-on message, if subscription profile information is present locally at the policy decision point 15, it directly obtains the subscription profile information locally, otherwise it retrieves actively from the subscription profile repository 13. Alike, if service policy information is present locally at the policy decision point 15, then it directly obtains the subscription profile information locally; otherwise it retrieves actively from the operator policy provision repository 14.

The policy decision point 15 generates and transmits all of the dynamic deep packet inspection policies to the policy enforcement point 12. Upon arrival of a data flow at the policy enforcement point 12, the policy enforcement point 12 identifies the service identifier of the data flow, selects one of the dynamic deep packet inspection policies in service identifier match in accordance with the identified service identifier, and performs corresponding policy scheduling on the data flow, for example, by an action of priority indication, flow monitoring/shaping, or congestion handling, etc., while performing either packet rejection or a BF approach for scheduling and forwarding for the data flow in mismatch.

The foregoing descriptions are merely illustrative of the exemplary embodiments of the invention, but the scope of the invention will not be limited thereto. Any variations and substitutions which will readily occur to those skilled in the art without departing from the technical disclosure of the invention will be encompassed within the scope of the invention that shall be as defined in the appended claims.

## Claims

1. A method for controlling a network service transported via a policy enforcement point (12), **characterized by** comprising:
receiving, by the policy enforcement point (12), a data flow belonging to a peer-to-peer, P2P, service from a terminal (11), wherein the data flow belonging to the P2P service is transported from the terminal (11) to another terminal, and the policy enforcement point (12) is an intermediate node in a data channel of the data flow;
identifying, by the policy enforcement point (12), a subscriber identifier of the data flow, conducting deep packet inspection in accordance with a P2P service feature mode information issued by an operator policy provision repository (14) and recorded in the policy enforcement point (12), and matching against with the P2P service feature mode information to determine a service identifier of the data flow, wherein the service identifier is adapted to indicate that data flow corresponds to the P2P service;
initiating, by the policy enforcement point (12), a policy requesting message carrying the service identifier and the subscriber identifier to a policy decision point (15);
associating, by the policy decision point (15), policy information in accordance with the subscriber identifier and the service identifier carried in the policy requesting message, and generating, by the policy decision point (15), one or more dynamic deep packet inspection policies upon determining from the service identifier that the data flow belongs to the P2P service;
obtaining, by the policy enforcement point (12), the one or more dynamic deep packet inspection policies from the policy decision point (15), wherein the one or more dynamic deep packet inspection policies comprise the subscriber identifier, the service identifier, the P2P service feature mode information, and at least one of parameters of a quality of service level, a limited number of flows, redirection, and uplink/downlink bandwidths; and
processing, by the policy enforcement point (12), the data flow in accordance with the one or more dynamic deep packet inspection policies.

2. The method according to claim 1, wherein the generating of the one or more dynamic deep packet inspection policies comprises:
retrieving, by the policy decision point (15), the subscription profile information and the service policy information; and
generating, by the policy decision point (15), the dynamic deep packet inspection policies based on the subscription profile information and the service policy information.

3. The method according to claim 2, wherein the policy decision point retrieves the subscription profile information and the service policy information from the policy decision point when the subscription profile information and the service policy information are pre-stored at the policy decision point (15).

4. The method according to claim 2, wherein the policy decision point (15) retrieves the subscription profile information from a subscription profile repository (13) and the service policy information from an operator policy provision repository (14) when the subscription profile information and the service policy information are not pre-stored at the policy decision point.

5. The method according to claim 1, wherein the generating of the one or more dynamic deep packet inspection policies comprises:
generating, by the policy decision point (15), the dynamic deep packet inspection policy based on the subscription profile information and the service policy information upon reception from the policy enforcement point (12) of the policy request message comprising a subscriber identifier and a service identifier.

6. The method according to claim 1, wherein the determining a subscriber identifier and a service identifier comprising:
retrieving, by the policy enforcement point (12) after being initiated, service feature mode information and corresponding service identifiers from a network administrator or an operator policy provision repository (14); and
matching, by the policy enforcement point (12) upon reception of the data flow from the terminal, against the service feature mode information, and identifying a service identifier corresponding to the data flow.

7. A policy enforcement point (12), **characterized by** comprising:
a deep packet inspection module (121) adapted to receive a data flow belonging to a peer-to-peer, P2P, service from a terminal (11), identify a subscriber identifier of the data flow, conduct deep packet inspection in accordance with a P2P service feature mode information issued by an operator policy provision repository (14) and recorded in the policy enforcement point (12), and match against with the service feature mode information to determine a service identifier of the data flow, wherein the data flow belonging to the P2P service is transported from the terminal (11) to another terminal, and the policy enforcement point (12) is an intermediate node in a data channel of the data flow, the service identifier is adapted to indicate that data flow corresponds to the P2P service, and the service feature mode information includes feature mode information of the P2P service;
means for generating a policy request message carrying the subscriber identifier and the service identifier, and sending the policy request message to a policy decision point (15); and
a policy enforcement module (122) adapted to process the data flow from the terminal based on a dynamic deep packet inspection policy obtained from the policy decision point (15), the dynamic deep packet inspection policy comprises the subscriber identifier, the service identifier, the P2P service feature mode information, and at least one of parameters of a quality of service level, a limited number of flows, redirection, and uplink/downlink bandwidths.

8. A system for controlling a network service, comprising a policy enforcement point (12), and a policy decision point (15), which are connected with a network, **characterized by**:
the policy decision point (15) configured to retrieve service policy information and subscription profile information, and generate based on the service policy information and the subscription profile information a dynamic deep packet inspection policy; and
the policy enforcement point (12) according to the claim 7.

9. The system according to claim 8, wherein the policy decision point (15) further comprises:
a first trigger module adapted to receive from the policy enforcement point the policy request message comprising the subscriber identifier and the service identifier, and to trigger the policy generation module to generate a dynamic deep packet inspection policy in accordance with the subscription profile information and the service policy information corresponding respectively to the subscriber identifier of a subscriber and the service identifier which are comprised in the policy request message upon reception of the policy request message.

## Patentansprüche

1. Verfahren zum Steuern eines über einen Richtliniendurchsetzungspunkt (12) transportierten Netzwerkdienstes, **dadurch gekennzeichnet, dass** es Folgendes umfasst:
Empfangen eines Datenflusses, der zu einem Peer-to-Peer- bzw. P2P-Dienst gehört, durch den Richtliniendurchsetzungspunkt (12) von einem Endgerät (11), wobei der Datenfluss, der zu dem P2P-Dienst gehört, von dem Endgerät (11) zu einem anderen Endgerät transportiert wird und der Richtliniendurchsetzungspunkt (12) ein Zwischenknoten in einem Datenkanal des Datenflusses ist;
Identifizieren einer Teilnehmerkennung des Datenflusses durch den Richtliniendurchsetzungspunkt (12), Durchführen von Deep Packet Inspection gemäß einer durch ein Betreiberrichtlinien-Bereitstellungsrepositorium (14) ausgegebenen und in dem Richtliniendurchsetzungspunkt (12) aufgezeichneten P2P-Dienstmerkmal-Modusinformation und vergleichen mit der P2P-Dienstmerkmal-Modusinformation, um eine Dienstkennung des Datenflusses zu bestimmen, wobei die Dienstkennung dafür ausgelegt ist, anzuzeigen, dass der Datenfluss dem P2P-Dienst entspricht;
Einleiten einer Richtlinienanforderungsnachricht, die die Dienstkennung und die Teilnehmerkennung führt, durch den Richtliniendurchsetzungspunkt (12) an einen Richtlinienentscheidungspunkt (15);
Assoziieren von Richtlinieninformationen durch den Richtlinienentscheidungspunkt (15) gemäß der Teilnehmerkennung und der Dienstkennung, die in der Richtlinienanforderungsnachricht geführt wird, und Erzeugen einer oder mehrerer dynamischer Deep-Packet-Inspection-Richtlinien durch den Richtlinienentscheidungspunkt (15), wenn aus der Dienstkennung bestimmt wird, dass der Datenfluss zu dem P2P-Dienst gehört;
Erhalten der einen oder mehreren dynamischen Deep-Packet-Inspection-Richtlinien durch den Richtliniendurchsetzungspunkt (12) von dem Richtlinienentscheidungspunkt (15), wobei die eine oder mehreren dynamischen Deep-Packet-Inspection-Richtlinien die Teilnehmerkennung, die Dienstkennung, die P2P-Dienstmerkmal-Modusinformation und mindestens einen der Parameter eines Dienstgüteniveaus, einer begrenzten Anzahl von Flüssen, Umleitung und
Aufwärtsstrecken-/Abwärtsstreckenbandbreiten umfassen; und
Verarbeiten des Datenflusses durch den Richtliniendurchsetzungspunkt (12) gemäß der einen oder mehreren dynamischen Deep-Packet-Inspection-Richtlinien.

2. Verfahren nach Anspruch 1, wobei das Erzeugen der einen oder mehreren dynamischen Deep-Packet-Inspection-Richtlinien Folgendes umfasst:
Abrufen der Subskriptionsprofilinformationen und der Dienstrichtlinieninformationen durch den Richtlinienentscheidungspunkt (15); und
Erzeugen der dynamischen Deep-Packet-Inspection-Richtlinien durch den Richtlinienentscheidungspunkt (15) auf der Basis der Subskriptionsprofilinformationen und der Dienstrichtlinieninformationen.

3. Verfahren nach Anspruch 2, wobei der Richtlinienentscheidungspunkt die Subskriptionsprofilinformationen und die Dienstrichtlinieninformationen von dem Richtlinienentscheidungspunkt abruft, wenn die Subskriptionsprofilinformationen und die Dienstrichtlinieninformationen in dem Richtlinienentscheidungspunkt (15) vorgespeichert sind.

4. Verfahren nach Anspruch 2, wobei der Richtlinienentscheidungspunkt (15) die Subskriptionsprofilinformationen von einem Subskriptionsprofilrepositorium (13) und die Dienstrichtlinieninformationen von einem Betreiberrichtlinien-Bereitstellungsrepositorium (14) abruft, wenn die Subskriptionsprofilinformationen und die Dienstrichtlinieninformationen nicht in dem Richtlinienentscheidungspunkt vorgespeichert sind.

5. Verfahren nach Anspruch 1, wobei das Erzeugen der einen oder mehreren dynamischen Deep-Packet-Inspection-Richtlinien Folgendes umfasst:
Erzeugen der dynamischen Deep-Packet-Inspection-Richtlinie durch den Richtlinienentscheidungspunkt (15) auf der Basis der Subskriptionsprofilinformationen und der Dienstrichtlinieninformationen beim Empfang der Richtlinienanforderungsnachricht von dem Richtliniendurchsetzungspunkt (12), die eine Teilnehmerkennung und eine Dienstkennung umfasst.

6. Verfahren nach Anspruch 1, wobei das Bestimmen einer Teilnehmerkennung und einer Dienstkennung Folgendes umfasst:
Abrufen einer Dienstmerkmal-Modusinformation und entsprechenden Dienstkennungen durch den Richtliniendurchsetzungspunkt (12) nach der Einleitung von einem Netzwerkadministrator oder einem Betreiberrichtlinien-Bereitstellungsrepositorium (14); und
Vergleichen mit der Dienstmerkmal-Modusinformation durch den Richtliniendurchsetzungspunkt (12) beim Empfang des Datenflusses von dem Endgerät und Identifizieren einer Dienstkennung, die dem Datenfluss entspricht.

7. Richtliniendurchsetzungspunkt (12), **dadurch gekennzeichnet, dass** er Folgendes umfasst:
ein Deep-Packet-Inspection-Modul (121), das dafür ausgelegt ist, einen Datenfluss, der zu einem Peer-to-Peer- bzw. P2P-Dienst gehört, von einem Endgerät (11) zu empfangen, eine Teilnehmerkennung des Datenflusses zu identifizieren, Deep-Packet-Inspection gemäß einer durch ein Betreiberrichtlinien-Bereitstellungsrepositorium (14) ausgegebenen und in dem Richtliniendurchsetzungspunkt (12) aufgezeichneten P2P-Dienstmerkmal-Modusinformation durchzuführen und mit der Dienstmerkmal-Modusinformation zu vergleichen, um eine Dienstkennung des Datenflusses zu bestimmen, wobei der Datenfluss, der zu dem P2P-Dienst gehört, von dem Endgerät (11) zu einem anderen Endgerät transportiert wird und der Richtliniendurchsetzungspunkt (12) ein Zwischenknoten in einem Datenkanal des Datenflusses ist, die Dienstkennung dafür ausgelegt ist, anzuzeigen, dass der Datenfluss dem P2P-Dienst entspricht, und die Dienstmerkmal-Modusinformation Merkmalmodusinformationen des P2P-Dienstes umfasst;
Mittel zum Erzeugen einer Richtlinienanforderungsnachricht, die die Teilnehmerkennung und die Dienstkennung führt, und zum Senden der Richtlinienanforderungsnachricht zu einem Richtlinienentscheidungspunkt (15); und
ein Richtliniendurchsetzungsmodul (122), das dafür ausgelegt ist, den Datenfluss von dem Endgerät auf der Basis einer von dem Richtlinienentscheidungspunkt (15) erhaltenen dynamischen Deep-Packet-Inspection-Richtlinie zu verarbeiten, wobei die dynamische Deep-Packet-Inspection-Richtlinie die Teilnehmerkennung, die Dienstkennung, die P2P-Dienstmerkmal-Modusinformation und mindestens einen der Parameter eines Dienstgüteniveaus, einer begrenzten Anzahl von Flüssen, Umleitung und Aufwärtsstrecken-/Abwärtsstreckenbandbreiten umfasst.

8. System zum Steuern eines Netzwerkdienstes, das einen Richtliniendurchsetzungspunkt (12) und einen Richtlinienentscheidungspunkt (15) umfasst, die mit einem Netzwerk verbunden sind, **gekennzeichnet durch**
den Richtlinienentscheidungspunkt (15), der dafür ausgelegt ist, Dienstrichtlinieninformationen und Subskriptionsprofilinformationen abzurufen und auf der Basis der Dienstrichtlinieninformationen und der Subskriptionsprofilinformationen eine dynamische Deep-Packet-Inspection-Richtlinie zu erzeugen; und den Richtliniendurchsetzungspunkt (12) nach Anspruch 7.

9. System nach Anspruch 8, wobei der Richtlinienentscheidungspunkt (15) ferner Folgendes umfasst:
ein erstes Triggermodul, das dafür ausgelegt ist, von dem Richtliniendurchsetzungspunkt die Richtlinienanforderungsnachricht zu empfangen, die die Teilnehmerkennung und die Dienstkennung umfasst, und das Richtlinienerzeugungsmodul zu triggern, eine dynamische Deep-Packet-Inspection-Richtlinie gemäß den Subskriptionsprofilinformationen und den Dienstrichtlinieninformationen zu erzeugen, die jeweils der Teilnehmerkennung eines Teilnehmers und der Dienstkennung entsprechen, die in der Richtlinienanforderungsnachricht enthalten sind, wenn die Richtlinienanforderungsnachricht empfangen wird.

## Revendications

1. Procédé de commande d'un service de réseau transporté via un point d'application de consignes (12), **caractérisé en ce qu'**il comprend :
la réception, par le point d'application de consignes (12), d'un flux de données appartenant à un service entre homologues, P2P, depuis un terminal (11), le flux de données appartenant au service P2P étant transporté du terminal (11) à un autre terminal, et le point d'application de consignes (12) étant un noeud intermédiaire dans un canal de données du flux de données ;
l'identification, par le point d'application de consignes (12), d'un identifiant d'abonné du flux de données, l'exécution d'une inspection poussée de paquets en fonction d'informations de mode caractéristique de service P2P délivrées par un référentiel de production de consignes d'opérateur (14) et enregistrées dans le point d'application de consignes (12), et une mise en correspondance avec les informations de mode caractéristique de service P2P afin de déterminer un identifiant de service du flux de données, dans lequel l'identifiant de service est adapté pour indiquer que le flux de données correspond au service P2P ;
le lancement, par le point d'application de consignes (12), d'un message de requête de consignes incluant l'identifiant de service et l'identifiant d'abonné vers un point de décision de consigne (15) ;
l'association, par le point de décision de consigne (15), d'informations de consigne en fonction de l'identifiant d'abonné et de l'identifiant de service inclus dans le message de requête de consigne, et la génération, par le point de décision de consigne (15),
d'une ou plusieurs consignes d'inspection poussée dynamique de paquets lors de la détermination par l'identifiant de service que le flux de données appartient au service P2P ;
l'obtention, par le point d'application de consignes (12), des une ou plusieurs consignes d'inspection poussée dynamique de paquets auprès du point de décision de consigne (15), les une ou plusieurs consignes d'inspection poussée dynamique de paquets comprenant l'identifiant d'abonné, l'identifiant de service, les informations de mode caractéristique de service P2P, et au moins l'un de paramètres de niveau de qualité de service, nombre limité de flux, redirection, et largeurs de bande de liaison montante/liaison descendante ; et
le traitement, par le point d'application de consignes (12), du flux de données en fonction des une ou plusieurs consignes d'inspection poussée dynamique de paquets.

2. Procédé selon la revendication 1, dans lequel la génération des une ou plusieurs consignes d'inspection poussée dynamique de paquets comprend :
le recouvrement, par le point de décision de consigne (15), des informations de profil d'abonnement et des informations de consigne de service ; et
la génération, par le point de décision de consigne (15), des consignes d'inspection poussée dynamique de paquets en fonction des informations de profil d'abonnement et des informations de consigne de service.

3. Procédé selon la revendication 2, dans lequel le point de décision de consigne recouvre les informations de profil d'abonnement et les informations de consigne de service auprès du point de décision de consigne quand les informations de profil d'abonnement et les informations de consigne de service sont pré-mémorisées au niveau du point de décision de consigne (15).

4. Procédé selon la revendication 2, dans lequel le point de décision de consigne (15) recouvre les informations de profil d'abonnement auprès d'un référentiel de profils d'abonnement (13) et les informations de consigne de service auprès d'un référentiel de production de consignes d'opérateur (14) quand les informations de profil d'abonnement et les informations de consigne de service ne sont pas pré-mémorisées au niveau du point de décision de consigne.

5. Procédé selon la revendication 1, dans lequel la génération des une ou plusieurs consignes d'inspection poussée dynamique de paquets comprend :
la génération, par le point de décision de consigne (15), de la consigne d'inspection poussée dynamique de paquets en fonction des informations de profil d'abonnement et des informations de consigne de service lors de la réception depuis le point d'application de consignes (12) du message de requête de consigne comprenant un identifiant d'abonné et un identifiant de service.

6. Procédé selon la revendication 1, dans lequel la détermination d'un identifiant d'abonné et d'un identifiant de service comprend :
le recouvrement, par le point d'application de consignes (12) après son lancement, d'informations de mode caractéristique de service et d'identifiants de service correspondants auprès d'un administrateur de réseau ou d'un référentiel de production de consignes d'opérateur (14) ; et
la mise en correspondance, par le point d'application de consignes (12) lors de la réception du flux de données depuis le terminal, avec les informations de mode caractéristique de service, et l'identification d'un identifiant de service correspondant au flux de données.

7. Point d'application de consignes (12), **caractérisé en ce qu'**il comprend :
un module d'inspection poussée de paquets (121) adapté pour recevoir un flux de données appartenant à un service entre homologues, P2P, depuis un terminal (11),
identifier un identifiant d'abonné du flux de données, exécuter une inspection poussée de paquets en fonction d'informations de mode caractéristique de service P2P délivrées par un référentiel de production de consignes d'opérateur (14) et
enregistrées dans le point d'application de consignes (12), et les mettre en correspondance avec les informations de mode caractéristique de service afin de déterminer un identifiant de service du flux de données, le flux de données appartenant au service P2P étant transporté du terminal (11) à un autre terminal, et le point d'application de consigne (12) étant un noeud intermédiaire dans un canal de données du flux de données, l'identifiant de service étant adapté pour indiquer que le flux de données correspond au service P2P, et les informations de mode caractéristique de service comportant des informations de mode caractéristique du service P2P ;
un moyen de génération d'un message de requête de consigne incluant l'identifiant d'abonné et l'identifiant de service, et d'envoi du message de requête de consigne à un point de décision de consigne (15) ; et
un module d'application de consignes (122) adapté pour traiter le flux de données provenant du terminal en fonction d'une consigne d'inspection poussée dynamique de paquets obtenue auprès du point de décision de consigne (15), la consigne d'inspection poussée dynamique de paquets comprenant l'identifiant d'abonné,
l'identifiant de service, les informations de mode caractéristique de service P2P, et au moins l'un de paramètres de niveau de qualité de service, nombre limité de flux, redirection, et largeurs de bande de liaison montante/liaison descendante.

8. Système de commande d'un service de réseau, comprenant un point d'application de consignes (12), et un point de décision de consigne (15), lesquels sont connectés à un réseau, **caractérisé par** :
le point de décision de consigne (15) configuré pour recouvrer des informations de consigne de service et des informations de profil d'abonnement, et générer en fonction des informations de consigne de service et des informations de profil d'abonnement une consigne d'inspection poussée dynamique de paquets ; et
le point d'application de consignes (12) selon la revendication 7.

9. Système selon la revendication 8, dans lequel le point de décision de consigne (15) comprend en outre :
un premier module déclencheur adapté pour recevoir du point d'application de consignes le message de requête de consigne comprenant l'identifiant d'abonné et
l'identifiant de service, et déclencher le module de génération de consigne afin de générer une consigne d'inspection poussée dynamique de paquets en fonction des informations de profil d'abonnement et des informations de consigne de service correspondant respectivement à l'identifiant d'abonné d'un abonné et à l'identifiant de service qui sont compris dans le message de requête de consigne lors de la réception du message de requête de consigne.
